# EUROPEAN PATENT SPECIFICATION

(11) **EP 3 407 442 B1**
(45) Date of publication and mention of the grant of the patent: **28.10.2020**
(21) Application number: 18166737.9
(22) Date of filing: 11.04.2018
(51) Int. Cl.: H02G 3/08, H01R 13/46, H02G 3/14, H01R 13/502

(54) **BOX FOR ELECTRICAL CONTROL GEAR**
GEHÄUSE FÜR ELEKTRISCHES SCHALTGETRIEBE
BOÎTE POUR ENGRENAGE DE COMMANDE ÉLECTRIQUE

(30) Priority: 25.05.2017 ES 201730614 U
(43) Date of publication of application: 28.11.2018
(73) Proprietor: Fabricacion De Material Electrico, S.A., 22130 Peralta de Alcofea, Huesca (ES)
(72) Inventor: LATRE NAVARRO, CARLOS JOSE, 08110 MONTCADA I REIXAC (BARCELONA) (ES)
(74) Representative: Durán-Corretjer, S.L.P.

(56) References cited:
- ES-A1- 2 257 227
- US-A- 4 978 318
- US-A- 5 012 043
- US-A1- 2005 072 588

## Description

The present invention relates to boxes for electrical control gear and to connecting components for boxes for control gear.

Boxes for electrical control gear are intended in particular to receive connectors for external appliances, as well as other elements (switches etc.) and the corresponding magneto-thermal elements.

As is known, a great variety of types of sockets are currently on the market, differing slightly in their dimensions and structure, especially in the way they are fixed. This poses considerable difficulty in adapting sockets to a box for control gear, as there are problems in adaptation owing to the aforementioned slight differences, which are reduced in many cases to differences in the number and relative spacing of the holes for screwing the sockets to the box.

The Spanish patent document with the publication number ES2214159, of the same applicant as the present invention, discloses a box that is intended to overcome the aforementioned drawback, by establishing means by which the box can accommodate any one of a wide variety of sockets with different fixing structures. In particular, said document discloses a box that envisages making each of the coupling zones of the sockets by means of a base sunk in the box itself and a plate attachable individually to each of them so that each of the bases and the corresponding attachable plates have a plurality of groups of incompletely perforated cavities grouped in sets, near the corners, each of which corresponds to one of the types of sockets currently on the market. This is achieved by moulding both the box and the detachable plates with said plurality of cavities grouped in sets that correspond to various commercial sockets. In this situation, when fitting any socket, the installer will use the set of cavities that fits the socket that he wants to install, and simply has to carry out the final piercing of the cavities, which is made easier because they will have narrow partitions at the base, which are easily removed at the time of installation.

A problem associated with this solution that allows the connection of various types of elements is that the groups of cavities may be so close together that the worker, on screwing the element to the box, destroys the separating wall between the cavities/holes, leaving an oversized hole that does not allow perfect positioning/fixing of the element.

One aim of the present invention is to disclose means that provide a solution to the aforesaid problem.

In particular, the present invention discloses a box for electrical control gear according to claim 1.

Preferably the first group of cavities and the second group of cavities are located on opposite faces of the adapting part.

More preferably, each group of projections extends beyond the adapting part in opposite directions.

Advantageously, the adapting holes comprise a recess in the adapting zone that interacts with recesses of the first or second group of projections to form one of said groups of cavities.

The adapting zone may comprise groups of cavities additional to those located in the adapting part.

Said cavities may be through-holes.

Especially advantageously, the coupling zone is in a base part independent of the rest of the box, and the base part and the adapting part can fit together in at least two different positions.

In general, the coupling zone will further comprise a main hole for receiving a socket.

The provision of various groups of cavities separately in an adapting part that can be coupled to the coupling zone in two different positions, offering different groups of cavities in each position, overcomes the problem mentioned above.

For better understanding, some drawings of one embodiment of boxes according to the present invention are appended, as an explanatory but non-limiting example.
Fig. 1 shows a perspective view of two parts (base part and adapting part) that make up an embodiment example of a cover according to the present invention.
Fig. 2 shows schematically the process of fitting the adapting part in the base part, in a first position of the adapting part.
Fig. 3 shows a perspective view that shows the cover mounted in said first position.
Fig. 4 is a perspective rear view, which illustrates removal of the adapting part from the base part starting from the position in Fig. 3.
Fig. 5 shows schematically turning the adapting part for fitting the adapting part in the base part in a second position.
Fig. 6 shows schematically fitting the adapting part in the base part in the second position.
Fig. 7 shows a perspective front view of the cover in the second position.

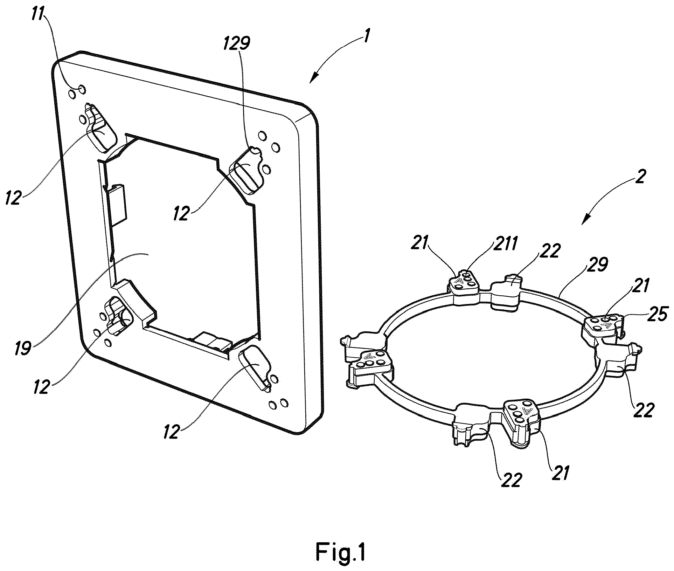

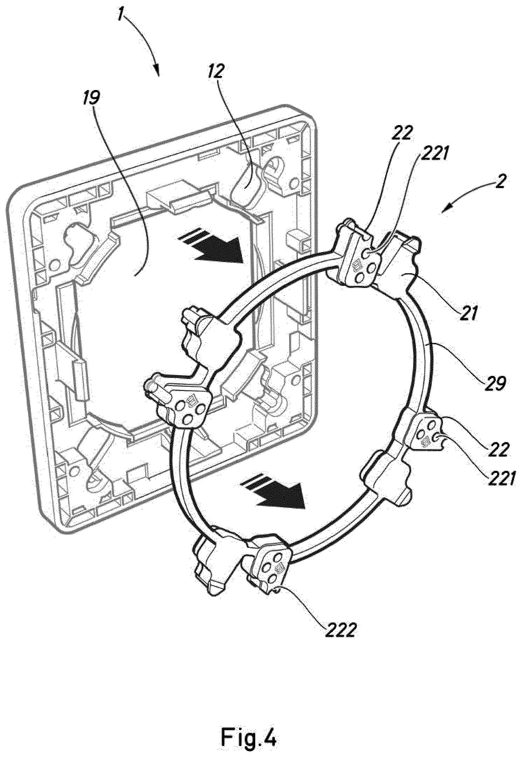

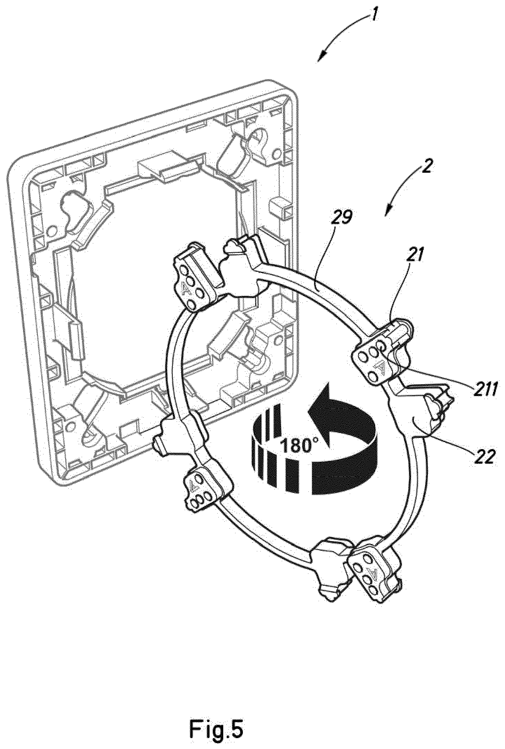

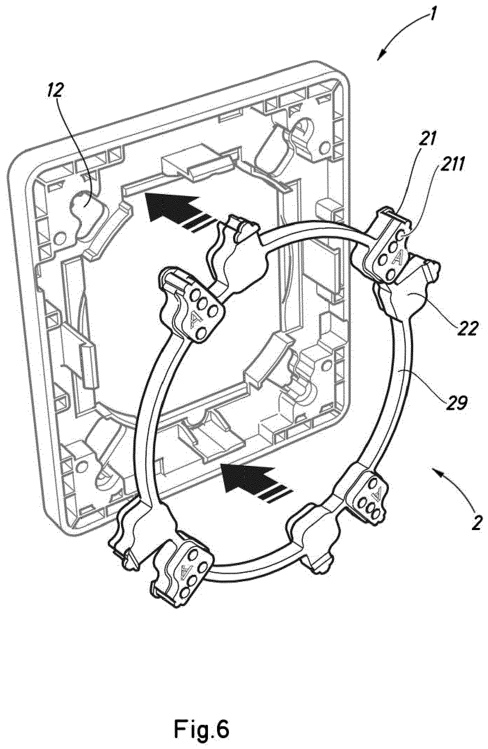

Figs. 1 to 7 show a cover that is intended to be fitted on the base of a box for control gear. The relation between a similar cover and the box for control gear, as well as connecting means, are shown for example in Spanish patent documents ES2214159A1 and ES2257227A1, of the same applicant as the present invention, therefore the base and the other elements forming the box will not be described.

The connecting cover in the figures is made up of two parts, a base part -1- and an adapting part -2-. The base part -1- has the main hole -19- for fitting and/or connection of a socket, actuator or other element. In the corners of the connecting zone, the example shown comprises 4 groups of three holes -11- for connection of three different types of elements. The holes -11- may be through-holes or may be blind cavities that will finally be pierced during installation. Moreover, the base part -1- has a group of four adapting holes -12-. The adapting holes -12- are larger than the cavities or holes -11- for connection of the elements. Their function is to receive combined projections -21- or -22- of the adapting part -2- that is independent of the base part -1-.

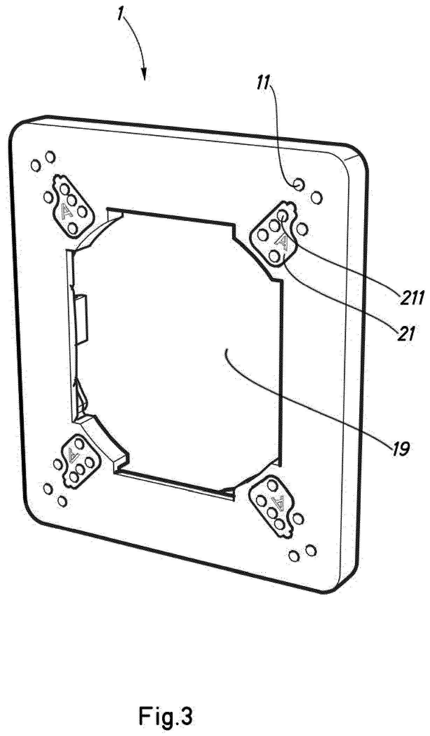

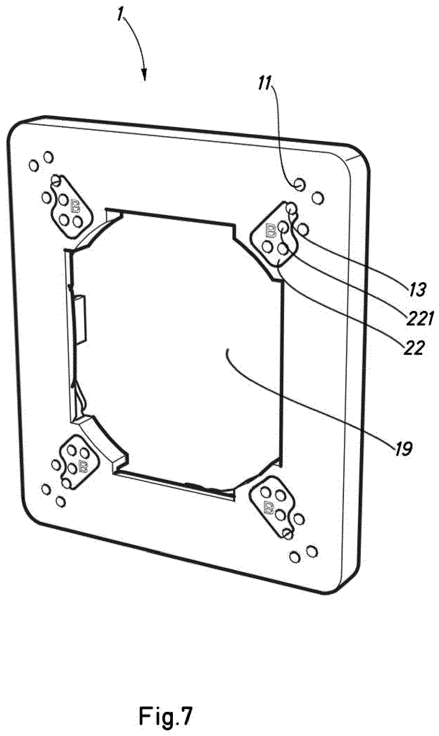

The adapting part -2- in the example shown takes the shape of a circular ring -29- that has two sets of projections -21-, -22-. Alternatively, the adapting part could assume any other shape, for example square. Each of the two sets of projections -21-, -22- has a form combined with the adapting holes -12-, so that they can enter and/or fit simultaneously into said adapting holes -12-. Each group of projections -21-, -22-has various sets of holes/cavities -211-, -221-, so that the user may choose to have one set of holes/cavities or another. Figs. 3 and 7 show the two different positions or configurations. Thus, the connecting cover has two different configurations of holes (or three, if we omit the positioning of the adapting part -2-). This avoids the cavities or holes being so close together that they may come into contact when the user screws down the electrical control gear, causing fixing problems.

In order to facilitate connection, each group of projections -21-, -22- overhangs in opposite directions with respect to the adapting part -2-, in such a way that the sets of holes/cavities of each group of projections -21-, -22- are oriented in opposite directions/located on opposite faces. This facilitates interaction between the base part -1- and the part, since each set of projections only overhangs in one direction. The two groups of projections -21-, -22- are slightly offset with respect to one another.

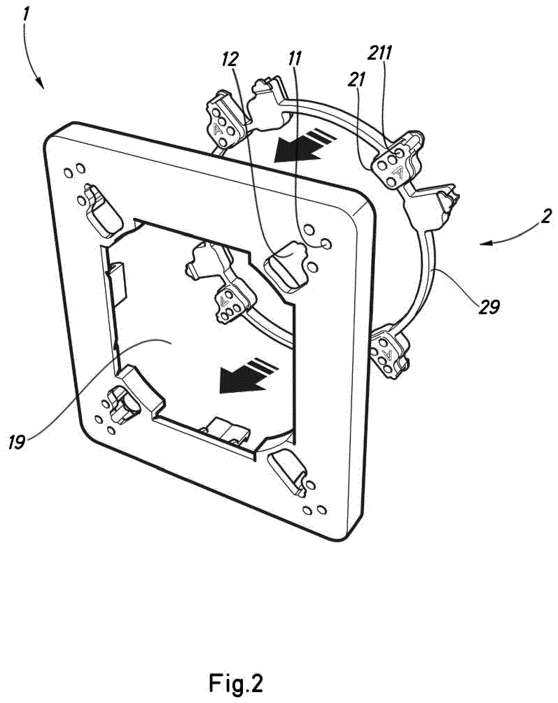

Accordingly, it is possible to alternate between the two configurations of projections, as shown in Figs. 2 to 7. If the adapting part -2- comes out of its site, it turns, rotating slightly, and goes back into its site.

For easy identification, each set of projections has an identifying symbol. In the case shown, the first group of projections -21- is marked with the letter "A" and the second group of projections -22- is marked with the letter "B".

In the embodiment shown, it can also be seen that the adapting holes -12- have a recess -129- that interacts with another combined recess -222- of one of the groups of projections -22- (letter B) to form a hole/cavity -13- when said group of projections -22- is introduced into the adapting holes -12-, producing the configuration in Fig. 7. On the other hand, the other group of projections -21- has a combined projection -25- that covers the recess -129- when said group of projections -21- is inserted, so that in the configuration in Fig. 2 it is not possible to see the hole/cavity -13- that is visible in Fig. 7.

The elements shown may be made of moulded plastic, or else some other type of material may be used.

In the embodiment shown, both the base part -1- and the adapting part have been made as separate parts. Alternatively, it would also be possible to integrate the base part -1- with the box for control gear or with other elements of the box for control gear.

Although the invention has been presented and described with reference to embodiments thereof, it will be understood that these do not limit the invention, therefore many design details or others could be varied, as will be obvious to a person skilled in the art after interpreting the subject matter that is disclosed in the present description, claims and drawings. Thus, all variants and equivalents will be included within the scope of the present invention if they can be considered to be included within the most extensive scope of the following claims.

## Claims

1. Box for electrical control gear that is intended to contain electrical control gear and to receive electrical sockets of various sizes on the front face of the cover, having coupling zones for the sockets, each of the coupling zones for the sockets, produced during moulding of said cover, having multiple groups of cavities (11) in the corners of said coupling zones, each group corresponding to the exact dimensions of a different socket, allowing the installer to select the desired group of cavities for inserting the fixing screws at the time of installation,
**characterized in that**
said cover is made up of two parts, a base part (1) and an adapting part (2), the base part having a main hole for fitting and/or connection of a socket and said coupling zones, and **in that** the coupling zones comprise a group of adapting holes (12) that receive combined projections of the adapting part, the adapting part having a first group and a second group of the aforementioned groups of cavities, each group of projections (21,22) having at least one of said first and second groups of cavities (211,221), and both the first group of projections and the second group of projections can fit indiscriminately in said adapting holes.

2. Box according to the preceding claim, wherein the first group of cavities and the second group of cavities (211,221) are located on opposite faces of the adapting part.

3. Box according to the preceding claim, wherein each group of projections (21,22) projects from the adapting part in opposite directions.

4. Box according to any one of the preceding claims, wherein the adapting holes (12) comprise a recess in the adapting zone that interacts with recesses of the first or second group of projections to form one of said groups of cavities.

5. Box according to any one of the preceding claims that comprises groups of cavities in the adapting zone of the base part which are additional to those cavities located in the adapting part.

6. Box according to the preceding claim, wherein the groups of cavities in the adapting zone of the base part are located in corners of said adapting zone.

7. Box according to any one of the preceding claims, wherein the coupling zone has a main hole for receiving a socket.

8. Box according to any one of the preceding claims, wherein said cavities are through-holes.

9. Box according to any one of the preceding claims, wherein the coupling zone is in a base part independent from the rest of the box, and the base part and the adapting part can fit together in at least two different positions.

## Patentansprüche

1. Gehäuse für elektrische Steuervorrichtungen, das dazu bestimmt ist, elektrische Steuervorrichtungen zu enthalten und elektrische Anschlussbuchsen verschiedener Größen auf der Vorderseite des Deckels aufzunehmen, das Kupplungszonen für die Anschlussbuchsen aufweist, wobei jede der Kupplungszonen für die Anschlussbuchsen, die beim Formen des Deckels hergestellt werden, eine Vielzahl von Gruppen von Hohlräumen (11) in den Ecken der Kupplungszonen aufweist, wobei jede Gruppe den genauen Abmessungen einer anderen Anschlussbuchse entspricht, was es dem Monteur ermöglicht, die gewünschte Gruppe von Hohlräumen zum Einsetzen der Befestigungsschrauben bei der Montage auszuwählen,
**dadurch gekennzeichnet, dass** der Deckel aus zwei Teilen besteht, ein Basisteil (1) und ein Adapterteil (2), wobei das Basisteil ein Hauptloch zum Stecken in und/oder Verbinden mit einer Steckbuchse und der Kupplungszonen aufweist, und dass die Kupplungszonen eine Gruppe von Adapterlöchern (12) umfassen, die kombinierte Vorsprünge des Adapterteils aufnehmen, wobei das Adapterteil eine erste Gruppe und eine zweite Gruppe der Gruppen von Hohlräumen aufweist, wobei jede Gruppe von Vorsprüngen (21, 22) zumindest eine der ersten und zweiten Gruppen von Hohlräumen (211, 221) aufweist, und sowohl die erste Gruppe von Vorsprüngen als auch die zweite Gruppe von Vorsprüngen unterschiedslos in die Adapterlöcher gesteckt werden können.

2. Gehäuse nach dem vorangegangenen Anspruch, wobei sich die erste Gruppe von Hohlräumen und die zweite Gruppe von Hohlräumen (211, 221) auf gegenüberliegenden Seiten des Adapterteils befinden.

3. Gehäuse nach dem vorangegangenen Anspruch, wobei jede Gruppe von Vorsprüngen (21, 22) von dem Adapterteil in entgegengesetzte Richtungen vorsteht.

4. Gehäuse nach einem der vorangegangenen Ansprüche, wobei die Adapterlöcher (12) eine Ausnehmung in der Adapterzone aufweisen, die mit Ausnehmungen der ersten oder zweiten Gruppe von Vorsprüngen zusammenwirkt, um eine der Gruppen von Hohlräumen zu bilden.

5. Gehäuse nach einem der vorangegangenen Ansprüche, das Gruppen von Hohlräumen in der Adapterzone des Basisteils umfasst, die zusätzlich zu den im Adapterteil befindlichen Hohlräumen vorhanden sind.

6. Gehäuse nach dem vorangegangenen Anspruch, wobei sich die Gruppen von Hohlräumen in der Adapterzone des Basisteils in Ecken der Adapterzone befinden.

7. Gehäuse nach einem der vorangegangenen Ansprüche, wobei die Kupplungszone ein Hauptloch zur Aufnahme einer Anschlussbuchse aufweist.

8. Gehäuse nach einem der vorangegangenen Ansprüche, wobei die Hohlräume Durchgangslöcher sind.

9. Gehäuse nach einem der vorangegangenen Ansprüche, wobei sich die Kupplungszone in einem Basisteil befindet, das von dem Rest des Gehäuses unabhängig ist, und das Basisteil und das Adapterteil in zumindest zwei verschiedenen Positionen zusammengesteckt werden können.

## Revendications

1. Boîtier pour engrenage de commande électrique qui est destiné à contenir un engrenage de commande électrique et à recevoir des prises électriques de différentes tailles sur la face frontale du couvercle, ayant des zones de couplage pour les prises, chacune des zones de couplage pour les prises, fabriquée pendant le moulage dudit couvercle, ayant de multiples groupes de cavités (11) dans les coins desdites zones de couplage, chaque groupe correspondant aux dimensions exactes d'une prise différente, permettant à l'installateur de sélectionner le groupe souhaité de cavités pour insérer les vis de fixation au moment de l'installation,
**caractérisé en ce que**
ledit couvercle est fait de deux parties, une partie de base (1) et une partie d'adaptation (2), la partie de base ayant un trou principal pour l'adaptation et/ou la connexion d'une prise et lesdites zones de couplage, et **en ce que** les zones de couplage comprennent un groupe de trous d'adaptation (12) qui reçoivent des excroissances combinées de la partie d'adaptation, la partie d'adaptation ayant un premier groupe et un second groupe des groupes de cavités susmentionnés, chaque groupe d'excroissances (21, 22) ayant au moins un desdits premiers et seconds groupe de cavités (211, 221), et l'un et l'autre du premier groupe d'excroissances et du second groupe d'excroissances peuvent s'adapter indifféremment dans lesdits trous d'adaptation.

2. Boîtier selon la revendication précédente, dans lequel le premier groupe de cavités et le second groupe de cavités (211, 221) sont logés sur des faces opposées de la partie d'adaptation.

3. Boîtier selon la revendication précédente, dans lequel chaque groupe d'excroissances (21, 22) fait saillie à partir de la partie d'adaptation dans des directions opposées.

4. Boîtier selon l'une quelconque des revendications précédentes, dans lequel les trous d'adaptation (12) comprennent un évidement dans la zone d'adaptation qui interagit avec des évidements du premier ou du second groupe d'excroissances pour former l'un desdits groupe de cavités.

5. Boîtier selon l'une quelconque des revendications précédentes qui comprend des groupes de cavités dans la zone d'adaptation de la partie de base qui sont en addition auxdites cavités logées dans la partie d'adaptation.

6. Boîtier selon la revendication précédente, dans lequel les groupes de cavités dans la zone d'adaptation de la partie de base sont logés dans des coins de ladite zone d'adaptation.

7. Boîtier selon l'une quelconque des revendications précédentes, dans lequel la zone de couplage comprend un trou principal pour recevoir une prise.

8. Boîtier selon l'une quelconque des revendications précédentes, dans lequel lesdites cavités sont des trous traversants.

9. Boîtier selon l'une quelconque des revendications précédentes, dans lequel la zone de couplage est dans une partie de base indépendante du reste du boîtier, et la partie de base et la partie d'adaptation peuvent s'adapter ensemble dans au moins deux positions différentes.
